# EUROPEAN PATENT APPLICATION

(11) **EP 4 095 567 A1**
(43) Date of publication of application: **30.11.2022**
(21) Application number: 22176253.7
(22) Date of filing: 30.05.2022
(51) Int. Cl.: G01V 5/00

(54) **TRANSPORTABLE BAGGAGE SCREENING MODULE**

(30) Priority: 28.05.2021 US 202117334551
(71) Applicant: Airport Capacity Solutions Limited, Northampton (GB)
(72) Inventor: Herriot, Alistair, Northampton (GB)
(74) Representative: Sach, Greg Robert

(57) **Abstract**

A baggage screening module (1), including: a baggage screening device (5); and a transportable container (3) for housing the baggage screening device; wherein the baggage screening device is operable within the container (3) to screen baggage, and the baggage screening module (1) is moveable as a unit to a place of use.

## Description

### TECHNICAL FIELD

The present invention relates to a baggage screening module. The baggage screening module can be used at a transportation hub, such as an airport, railways and ports.

### BACKGROUND

Transportation hubs such as airports require items of baggage to undergo security screening before being loaded onto an aircraft. Screening is required to check that items of baggage do not contain any hazardous articles such as weapons, explosive materials or component parts thereof. To achieve this baggage handling systems include baggage screening devices, such as x-ray imaging devices, which screen each item of baggage that has been checked in. At large transportation hubs the baggage handling facilities can be capable of processing tens of thousands of bags per day. Since no article of baggage can be loaded on to an aircraft unless it has undergone the necessary security checks, the baggage handling facility is a critical system for the airport.

Baggage handling systems can be very sophisticated and very large. There are many things that can go wrong with the system that can cause a shutdown to occur. When the baggage handling system fails, this has many knock on effects. For example, flights can be delayed. Delayed flights can incur cost penalties and cause logistical problems for the airlines and airport. Delayed flights can also lead to a significant increase in the number of people in the airport, which have to be managed. Alternatively, if flights are allowed to leave, items of baggage do not travel on the same flights as their respective owners, but instead follow on later flights after the necessary security checks have been completed. This can be very annoying for passengers since they will not having access to their personal items, such as clothing, and may have to make a special trip to collect later arriving baggage.

When the baggage handling system is returned to operation there is a significant backlog of baggage to be processed, which can cause logistical problems, and cause further delays.

The disruption caused by a baggage handling system failure can generate negative publicity and ill will from passengers towards the airport. Passengers may choose to fly from a different airport in the future.

Similar problems can occur during peak times for airports when the number of bags to be processed approaches, or exceeds, its design capacity.

Another problem for airports is how to undertake routine maintenance on the baggage handling system, given the critical nature of the system, and the very high levels of demand.

Accordingly the present invention seeks to provide a baggage screening module that mitigates at least one of the aforementioned problems, or at least provides an alternative to existing modules. In particular, the invention seeks to provide a baggage screening module that can be used when the main baggage handling system fails, lacks capacity or requires maintenance work.

### BRIEF SUMMARY

According to one aspect of the invention there is provided a baggage screening module, including: a baggage screening device; and a transportable container for housing the baggage screening device; wherein the baggage screening device is operable within the container to screen baggage, and the baggage screening module is moveable to a place of use.

During periods of non-use, the screening device is stored in the container in its normal operational state and therefore is quickly ready to process baggage when the module is deployed, for example due to a failure of the main baggage handling system, due to unusually high demand, or routine maintenance. Since the baggage screening device is arranged to operate within the transportation container, the container provides a weatherproof and secure environment for the baggage screening device, as well as providing a structure that protects the baggage screening device during transportation.

Thus the baggage screening module is a substantially self-contained unit that is transportable from a storage position to the place of use, to provide baggage screening when needed. The module can be returned to the storage position when no longer required. The baggage screening module may be located at the transportation hub in a storage facility until required. Alternatively, the baggage screening module can be stored off site, and delivered when required.

The baggage screening module is typically used at transportation hubs, such as airports, where a high throughput of baggage screening is required. However, the module can be used in any required context, for example at an event or venue.

Advantageously, the baggage screening device can comprise an imaging device. The baggage screening device uses imaging means for producing images of baggage contents. For example, the imaging means may use electromagnetic waves to produce images of the baggage contents, and preferably uses X-rays to scan the baggage contents. The main purpose of the screening device is to detect hazardous articles, such as weapons and explosive materials.

Advantageously, the screening device is fixed to the transportable container in its normal operating orientation. This ensures that the screening device does not move when the module is transported, and that the module is quickly operational when the module is delivered to the place of use. Typically, the screening device is fixed to a base of the container.

Advantageously, the container can include a first opening for receiving baggage. In preferred embodiments the first opening is located at a first end of the container.

Advantageously the container can include a first door for selectively closing the first opening. In preferred embodiments, the first door comprises a roller shutter door.

Advantageously, the module can include baggage transport means for feeding incoming baggage to the screening device. In preferred embodiments the baggage transport means includes a conveyor. The conveyor is located between the first opening and the screening device. In preferred embodiments, the baggage transport means is fixed to the transportable container in its normal operating orientation. For example, the baggage transport means can be fixed to the base of the container.

Advantageously, the container can include a second opening for dispatching screened baggage. In preferred embodiments, the second opening is located at a second end of the container.

Advantageously, the container can include a second door for selectively closing the second opening. In preferred embodiments, the second door comprises a roller shutter door.

The module can include baggage transport means for transporting screened baggage away from the screening device. The baggage transport means transports screened baggage from the screening device to the second opening, where it exits the container. Preferably, the baggage transport means includes a conveyor. The conveyor is located between the screening device and the second opening. In preferred embodiments the baggage transport means is fixed to the transportable container in its normal operating orientation. For example, the baggage transport means can be fixed to the base of the container.

Advantageously, at least one of the first and second conveyors can be substantially rectilinear. Preferably the first and second conveyors are arranged along a longitudinal axis of the container. Preferably the screening device is located between the first and second conveyors.

Advantageously, the container can include at least one lifting formation, and preferably a plurality of lifting formations. For example, the container may include at least one eyebolt, and preferably includes a plurality of eyebolts. In preferred embodiments each container corner post includes a lifting formation, or has a lifting formation attached thereto. The or each lifting formation enables a lifting device, such as a crane, to engage the container and lift the entire baggage screening module from the ground. The lifting device may mount the baggage screening module on to a vehicle, such as a flatbed lorry. The baggage screening module can then be transported from the storage position to its place of use. The module can be used outdoors, for example on an airport apron, or indoors, for example in a baggage handling hall. In some situations, the crane may be used to transport the baggage screening module to its place of use, rather than using a lorry.

Advantageously, the module can include temperature control means for controlling the temperature within the container. This enables the invention to be used in a wide variety of climates, and helps to protect any equipment located with the container, and provide a comfortable environment for operators. In preferred embodiments, the control means is arranged to maintain the temperature within the container below 35C.

Advantageously, the temperature control means can include at least one of: a heating means, a cooling means, and a thermostatic device. In preferred embodiments, the means for controlling the temperature within the container includes at least one air-conditioning unit.

Advantageously, the module can include means for controlling the humidity within the container. In preferred embodiments the means for controlling the humidity with the container includes at least one dehumidifier. In some embodiments, the means for controlling humidity can be part of the same system as the means for controlling temperature. For example, a dehumidifier can be included in the same unit as an air conditioner.

Advantageously, the module can include a computer terminal for use by an operator. The container includes seating for the operator.

Preferably, the module includes a control panel for controlling operation of equipment housed within the container. For example, the control panel can include at least one of: a first control for controlling operation of the baggage screening device; a second control for controlling operation of the incoming baggage transport means; and a third control for controlling operation of outgoing baggage transport means.

Advantageously, the module can include a communications link. The communications link enables the baggage screening module to exchange at least one of data and control signals with at least one of a main baggage handling system, local server, and a local computer.

Advantageously, the container can include a third opening. Preferably, the third opening is sized to enable the baggage screening device to be removed from the container. Typically the third opening is provided in a side wall of the container. The third opening enables equipment stored within the container to be removed therefrom, for example for maintenance or upgrades.

Advantageously, the container can include a third door for selectively closing the third opening. In preferred embodiments the third door comprises a roller shutter door.

Advantageously the container can include a fourth opening. The fourth opening is provided for maintenance purposes. Preferably the fourth opening is provided in a side wall of the container. The fourth opening enables equipment stored within the container to be removed therefrom, for example for maintenance or upgrades.

Advantageously, the container can include a fourth door for selectively closing the fourth opening. In preferred embodiments, the fourth door comprises a roller shutter door.

Advantageously, the container is substantially cuboid. The container includes two side walls. The container includes two end walls. The container includes a base. The container includes a top. Typically the container is elongate. The size of the container is determined to some extent to by the type of baggage screening device and/or baggage transportation mechanisms used. Typical container sizes are as follows: length in the range 6m to 16m; width in the range 2m to 5m; height in the range: 2m to 4m. In some embodiments, the size and shape of the container is comparable to an ISO intermodal shipping container (L = 12.2m, W = 2.4m, and H = 2.6m). A typical weight of the module is several tonnes, typically less than 10 tonnes.

Advantageously, the container can include metal walls, and preferably steel walls.

Advantageously, the container can be thermally insulated. At least one of the side walls, end walls, roof and base is thermally insulated. This helps to control the temperature within the container. For example, glass fibre insulation or mineral wool can be used to insulate the container.

Advantageously the module can include a fire detection system. Advantageously, the fire detection system can be arranged to automatically operate at least one of the first, second, third and fourth doors when a fire is detected. For example, the fire detection system can be arranged to close at least one of the first, second, third and fourth doors when a fire is detected. In preferred embodiments, the container has at least a 1 hour fire rating.

Advantageously, the module can include an electrical distribution board. The distribution board provides power to at least some of the electrical systems in the module, including the baggage transportation means and the screening device. The distribution board also provides power to ancillary systems such as air-conditioning, dehumidifiers, fire detection, lighting, computer terminals, roller shutter door drive systems, etc. The distribution board is arranged to receive a 3-phase electrical supply. The distribution board is arranged to receive a single-phase electrical supply.

Advantageously, the module can include means for connecting the module to a mains electrical supply. For example, a suitable connector can be provided for connecting the distribution board to the mains.

Advantageously, the module can include means for connecting the module to a non-mains electrical supply, such as an electrical generator. For example, the module can include a Commando type socket with an internal switch. This is useful in situations where no mains supply is available. The Commando type socket is connected to the distribution board.

The module is typically stored in an operable condition and just needs to be connected to an electrical supply to operate the screening device.

Advantageously, the module can include a levelling system for levelling the container.

According to another aspect of the invention there is provided a method for providing baggage screening at a transportation hub, such as an airport, including: providing a baggage screening module according to any configuration described herein; and transporting the baggage screening module from a storage position to an operational position.

Advantageously, the method can include lifting the baggage screening module with a lifting device, such as crane.

Advantageously, the method can include transporting the baggage screening module from the storage position to the operational position by a vehicle, such as a lorry or crane. The vehicle may include a HIAB device for loading / unloading the module from the vehicle.

Advantageously, the method can include supplying baggage to the baggage screening device, and screening the baggage supplied.

Advantageously, the method can include using a conveyor to feed baggage to the screening device.

Advantageously, the method can include removing screened baggage from the container.

Advantageously, the method can include using a conveyor to feed baggage away from the screening device.

Advantageously, the method can include controlling temperature with the container using a temperature control device.

Advantageously, the method can include controlling humidity within the container using a dehumidifying device.

Advantageously, the method can include the baggage screening module electronically communicating with a main baggage handling system at the transportation hub.

Advantageously, the method can include deploying the baggage screening module in response to a failure in a main baggage handling system at the transportation hub.

Advantageously, the method can include deploying the baggage screening module in response to a lack of capacity in a main baggage handling system at the transportation hub.

Advantageously, the method can include deploying the baggage screening module in response to undertaking maintenance work on a main baggage handling system at the transportation hub.

### BRIEF DESCRIPTION OF THE DRWAINGS

An embodiment of the present invention will now be described, by way of example only, with reference to the accompanying drawings in which:
Figure 1 is a front view of a baggage screening module according to the invention; Figure 2 is a rear view of the baggage screening module of Figure 1;
Figure 3 is a view of a first (baggage receiving) end of the baggage screening module of Figure 1;
Figure 4 is a view of a second (baggage dispatching) end of the baggage screening module of Figure 1;
Figure 5 is a diagrammatic cross-sectional plan view of the baggage screening module of Figure 1; and
Figure 6 is a diagrammatic longitudinal cross-sectional view of the baggage screening module of Figure 1.

### DETAILED DESCRIPTION

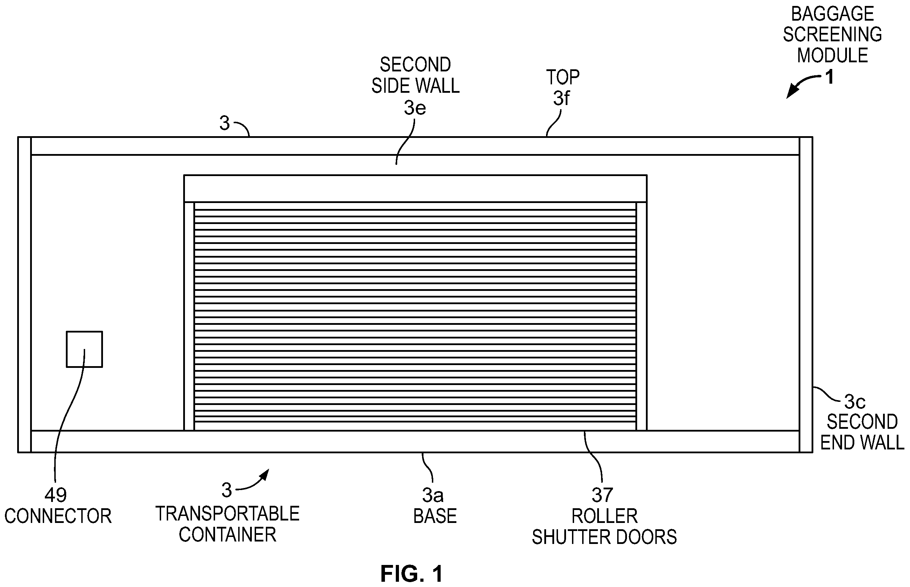

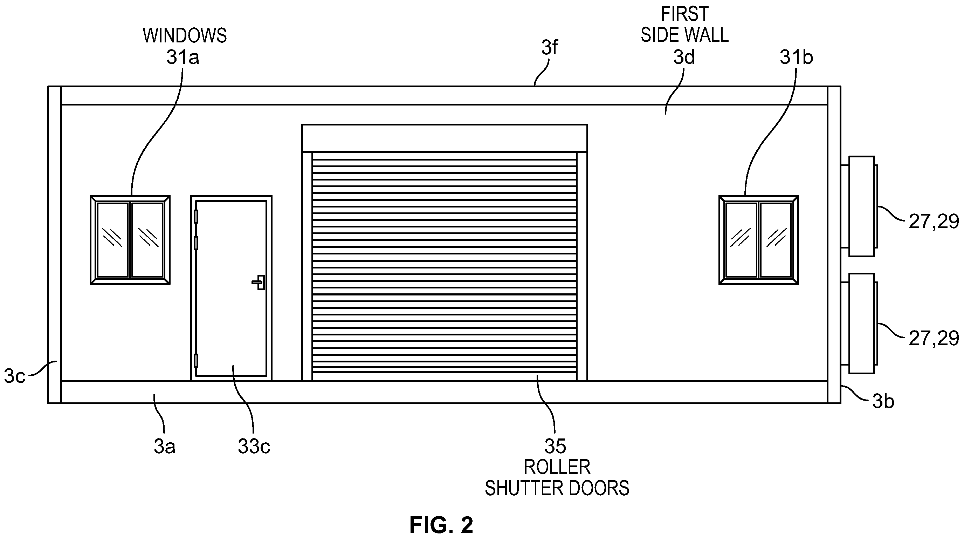

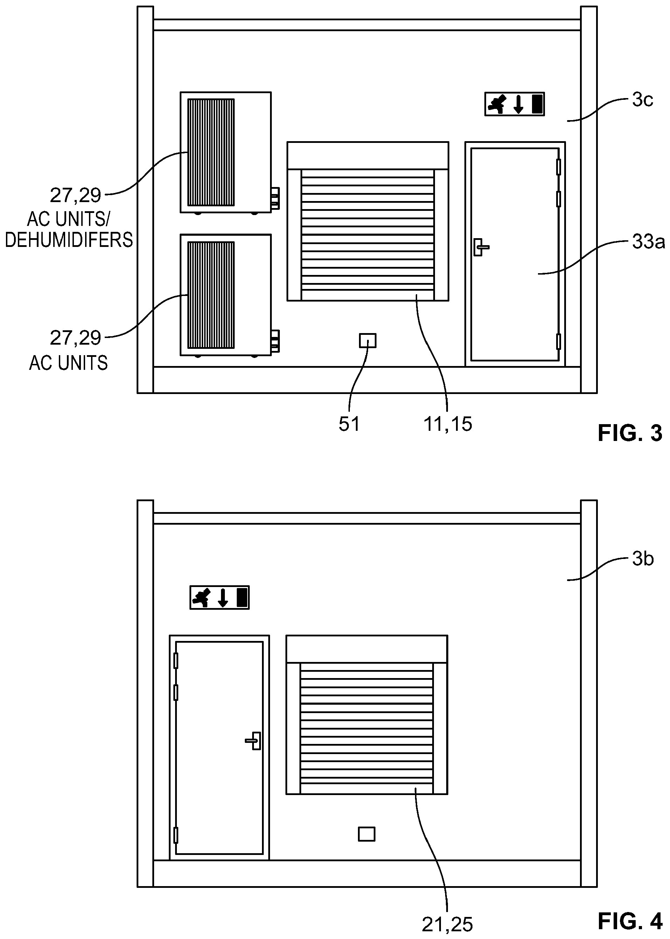

Figures 1 to 6 show views of a baggage screening module 1 according to the invention. The baggage screening module 1 includes a transportable container 3 and a baggage screening device 5.

The baggage screening device 5 is used for security purposes to image the contents of each item of baggage that passes through the screening device 5, for example to detect and/or identify at least one of explosive materials, weapons and illicit materials such as illegal narcotics. The screening device 5 can be of any suitable type. Typically, the screening device 5 comprises an X-ray imaging device, which includes a (Visual Display Unit) VDU for displaying images of the baggage contents. For example, the screening device 5 can comprise a Morpho CTX 9800, which uses a Clarity Data Acquisition System (CDAS), to generate HD3D images of baggage contents. A device of this type can process around 5,000 bags per day.

As can be seen in the Figures, the container 3 has a substantially elongate cuboid shape. The container 3 includes a base 3a, a first end wall 3b, a second end wall 3c, a first side wall 3d, a second side wall 3e and a top 3f.

The container 3 provides a weatherproof housing for the baggage screening device 5, and other equipment located therein.

The container 3 includes a baggage receiving port 9, which comprises an opening 11 in the first end wall 3b of the container and a roller shutter door 15 for selectively opening and closing the opening 11. The roller shutter door 15 can be manually operated or can comprise a driven roller shutter door. The module 1 includes an input conveyor 7 arranged to transport items of baggage towards the screening device 5. The input conveyor 7 is located between the receiving port 9 and the baggage screening device 5, and is arranged to transport incoming baggage from the receiving port 9 to the screening device 5.

The container 3 includes a baggage dispatch port 19, which comprises an opening 21 in the second end wall 3c of the container and a roller shutter door 25 for selectively opening and closing the opening 21. The roller shutter door 25 can be manually operated or can comprise a driven roller shutter door. The module 1 includes an output conveyor 17 for transporting screened baggage away from screening device 5. The output conveyor 17 is located between the screening device 5 and the dispatch port 19, and is arranged to transport screened baggage from the screening device 5 to the dispatch port 19.

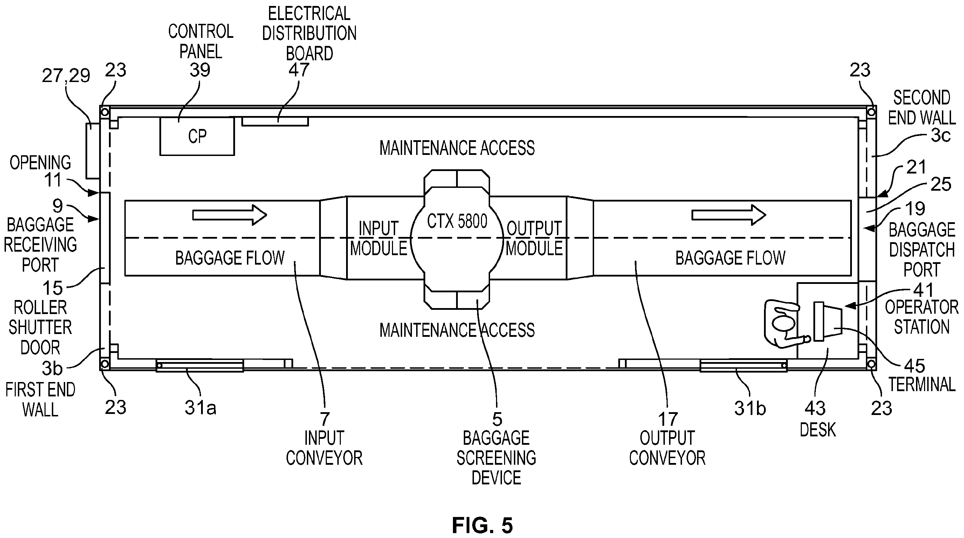

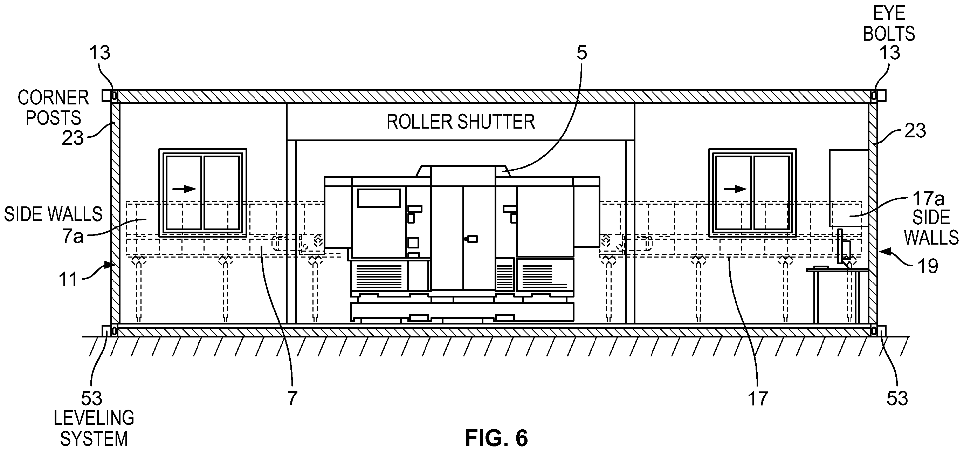

Each of the conveyors 7,17 has a substantially rectilinear arrangement, and includes side walls 7a,17a to channel items of baggage and to prevent them from falling from the conveyor. As can be seen in Figures 5 and 6, the conveyors 7,17 and screening device 5 are arranged along a substantially straight line, in a longitudinal direction of the container, from the baggage receiving port 9 to the baggage dispatch port 19. The screening device 5 is located between the input and output conveyors 7,17. The screening device 5 is located in a central portion of the container 5. The arrangement provides a very efficient mobile baggage screening system.

It is to be noted that the baggage screening system is set up in an operational condition within the container 3. That is, the conveyors 7,17 and screening device 5 are set up in their normal operating positions and orientations, even when the module 1 is in storage or is being transported. Therefore, the module can be transported from a storage position, to its temporary place of use, in a condition that is substantially ready for operation, it just being necessary to connect the module to an appropriate power source at the place of use.

The container base, walls and top 3a-3f are made from metal, typically steel. The construction of the container 3 has to be sufficiently strong to support the weight of the equipment mounted therein, which can be serval tonnes. The container 3 includes lifting formations, preferably in the form of eyebolts 13, which are anchored to corner posts 23. The lifting formations provide anchor points for a crane to engage, and by which the whole module 1 can be lifted by the crane.

Each of the conveyors 7,17 and screening device 5 is releasably fixed to the base 3a in their normal operating orientations and positions, for example by bolts. This ensures that the equipment does not move during transportation, and is ready for use on delivery.

The module 1 includes a levelling system 53 for levelling the container 3 when it is delivered to its place of use. The levelling system 53 includes adjustable screw jack feet located on the base of the Container at each external corner.

The container base, walls and top 3a-3f each have an internal lining, with includes thermally insulating material, such as glass fibre or mineral wool. This is to help maintain the temperature within the container 3 within an acceptable range, which is typically -12C to +35C. It will be appreciated that the module 1 may be used in both hot and cold countries and therefore different types and amounts of insulation may be required to suit different operating environments. The module 1 also includes equipment for actively controlling environmental parameters within the container 1, such as air conditioning units 27, and dehumidifiers 29. The air conditioning units 27 are arranged to actively control air temperature within the container and include a thermoset, heating device and chiller. Preferably the dehumidifiers are integrated into the air condition units 27. By controlling the environmental conditions within the container 3, this can help to maintain and protect the equipment stored within the container.

A frost protection system may optionally be included in the module 1.

The container 3 includes windows 31a, 31b, and access doors 33a,33b,33c for staff operating the baggage screening system. The container also includes roller shutter doors 35,37 in the respective side walls 3d,3e, which provide access for maintenance purposes. The doors 35,37 are sufficiently large, for example to allow the baggage screening device 5 and conveyors to be removed and replaced. The roller shutter doors 35,37 can be manually operated or can comprise a driven roller shutter door.

The module includes a control panel 39, which includes controls for the conveyors 7,17 and the baggage screening device 5. The baggage screening system can operate as a stand-alone system. Alternatively, the control panel 39, can include a data communications link (not shown) for connecting the control panel to the main baggage handling system. This enables the module 1 to share data with, and receive control signals from, the main baggage handling system. The communications link enables the module 1 to communicate with local computers and/or servers.

Emergency stop controls can be located on the control panel 39. Additionally, or alternatively, emergency stop controls can be located at other locations within the container 3.

An operator station 41 is provided. This includes a desk 43 and a terminal 45 connected to the screening device 5, to enable the operator to view images generated by the screening device 5, and to enable the operator to control routine operations.

An electrical distribution board 47 is provided to supply power to each electrical system within the container. The electrical distribution board 47 is connected to a connector 49 arranged for connecting with a mains supply. The mains supply provides a 3 phase supply and/or a single phase supply. The distribution board 47 distributes 415V; 230V and 12V supplies. The module also includes a connector 51 for connector the distribution board 47 with an electrical generator, which can be used if a mains supply is unavailable.

When not in use, the baggage screening module 1 is stored in a storage area, which may be a space within a building, such as a hanger, or alternatively an outside space. The storage area may be located at the transport hub, or may be located at a different site.

A decision to deploy the baggage screening module 1 is usually taken in response to a problem occurring with the main baggage handling system, for example a system failure, insufficient capacity within the main system, or a planned outage of the main baggage handling system, for example to conduct routine maintenance, install a new module, upgrade and test system software, etc.

To deploy the baggage screening module 1, the module 1 is transported from the storage area to the place of use. This may involve, for example a crane lifting the module 1 onto a lorry, and the lorry driving the module 1 to the place of use. The lorry itself may of course include a lifting arm, for example a HAIB lorry, which is capable of lifting the module 1 onto the lorry. If the module 1 is too large for a conventional lorry, then a wheeled crane can be used to transport the module 1 to the place of use.

The crane lifts the module 1 via the lifting eyes 13. The crane may include a cradle having lifting chains and hooks. The hooks engage the lifting eyes 13.

The baggage screening module 1 is typically deployed to a convenient place for use, such as an airport apron, or an existing baggage handling hall. Upon arrival, the module 1 is connected to an electrical supply to power the module's electrical systems. The electrical supply is preferably a mains supply, if available, and if not an electrical generator.

Optionally, the module 1 can be electronically connected to the main baggage handling system via a communications link, to share data and control signals therewith. Alternatively the module 1 can operate as a standalone screening system.

In use, items of baggage enter the container 3 at a first end of the container via the baggage receiving port 9 and are transported to the screening device 5 by the input conveyor 7. The screening device 5 screens the contents of the baggage and, assuming no hazardous materials are identified by the screening process, the items of baggage are transported from the screening device 5 to the dispatch port 19 at a second end of the container, by the output conveyor 17. The items of baggage exit the container 3 at the second end of the container.

When the module 1 is no longer required, it is transported back to the storage area.

The main advantages of the system are that it provides a means for screening baggage when the main baggage handling system is not able to do so. The invention provides at least some baggage handling capacity, which prevents large backlogs from occurring and minimises disruption to the airport and passengers. The module can be designed, built and tested in a factory. It can be delivered to a site ready for use. The container provides a weather proof, controlled environment for the equipment. The container ensures the safety and security of the equipment located therein, and provides easy access to the equipment for maintenance purposes. The gross weight is typically less than 10 tonnes and therefore the module 1 is easily transportable.

While the baggage screening module has been designed with transportation hubs, such as airports, in mind, it could be used at other transportation hubs where screening is required, for example when boarding ships, or at venues or events where security matters are of concern and where it is not uncommon for at least some of the attendees to bring along items of baggage.

Although the present embodiment has been described in connection with specific figures, it should be understood that the present disclosure should not be unduly limited to such specific embodiments. Furthermore, it will be apparent to the skilled person that modifications can be made to the above embodiment that fall within the scope of the invention.

For example, instead of using the specified imaging device, other types of imaging device can be used, for example the Morpho CTX 9800, Morpho CTX 5800 and L3 MVT-HR (not exhaustive).

While the baggage screening device 5 comprises an imaging type screening device, it is possible that other types of screening device can be used, for example devices that detect vapours from explosive materials.

The container 3 can be sized and shape to accommodate the equipment to be housed. In some arrangements, the equipment may fit into a container having similar dimensions to an ISO shipping container. This enables the module 1 to be transported easily by existing lorries.

Other types of lifting formations can be included in the container to suit different types of crane.

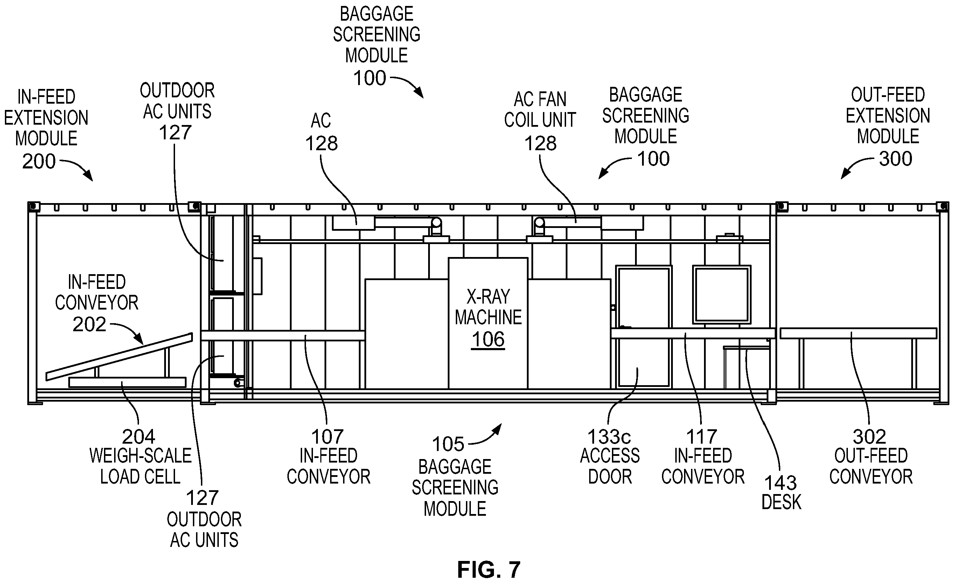

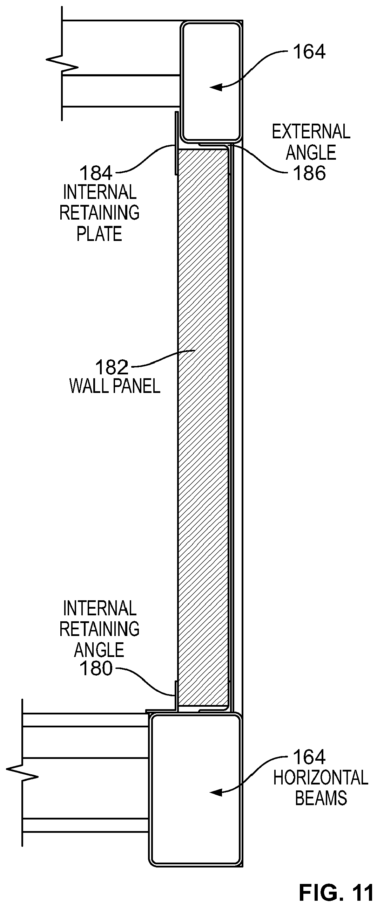

Another embodiment of a baggage screening module is illustrated and described with respect to FIGS. 7 to 12. The foregoing description is largely applicable to the present embodiment and the following description focuses on the differences of the present embodiment over that which has been described heretofore. It should be appreciated that features described herein with respect to each embodiment are fully combinable with one another to the extent consistent.

In FIG. 7, a cross-sectional view of the baggage screening module 100 is illustrated. The baggage screening module 100 is extended by an appended in-feed extension module 200 and an appended out-feed extension module 300. Only one of the extensions modules 200, 300 may be provided in some applications. The in-feed extension module 200 and the out-feed extension module 300 are each provided in the form of an enclosed container having a floor, side walls and a roof to protect users and objects inside the container. Like the previously described baggage screen module 1 of FIGS. 1 to 6, the in-feed extension module 200 and the out-feed extension module 300 are transportable by lorry/track (e.g. on a flat bed thereof) and movable by crane or other heavy duty machinery. The in-feed extension module 200, the baggage screening module 100 and the out-feed extension module 300 may include eye bolts or other structure to allow receipt of crane hooks for lifting, e.g. from and to a flatbed of a transport vehicle. The in-feed extension module 200 and the out-feed extension module 300 are separable from the baggage screening module 100 and are thus separately transportable. The in-feed extension module 200 and the out-feed extension module 300 can be abutted against either end of the baggage screening module 100. The in-feed extension module 200 and the out-feed extension module are, like the baggage screening module 100, generally rectangular prism shaped. The in-feed extension module 200 and the out-feed extension module 300 have a substantially same height dimension and dimension along a width of the baggage screening module 100 although a dimension along a length of the baggage screening device may be different (e.g. shorter). In this way, the baggage screening module 100 and the in-feed and out-feed extension modules 200, 300 have substantially matching dimensions apart from in a direction of extension.

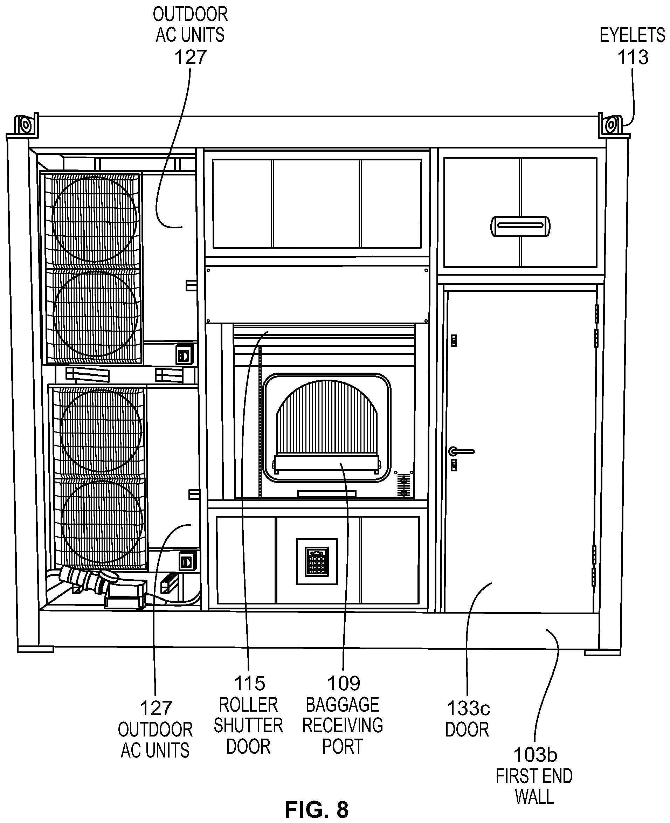

In embodiments, the in-feed extension module 200 includes an in-feed conveyor 202 that is upwardly inclined so as to deliver objects for scanning (e.g. baggage) from a relatively low position into a relatively raised baggage screening port 109 (see FIG. 8) of the baggage screening module 100. The in-feed conveyor 200 may be associated with a weighing scale 204 to weigh any baggage on the in-feed conveyor 202. A computerized controller (not shown) may weigh baggage items individually or cumulatively over a certain number of items or period of time or in terms of a current load on the in-feed conveyor 107. An alarm or advisory may be issued by a computer controller when a weight limit is exceeded. The in-feed conveyor is inclined for convenience of baggage handlers but this feature is not essential and a horizontal in-feed conveyor 107 could be provided. The out-feed extension module 300 includes an out-feed conveyor 302 for receiving baggage from a baggage dispatch port (not shown) of the baggage screening module 100. The in-feed extension module 200 and the out-feed extension module 300 include baggage communication ports through a wall abutting the baggage screening module 100 for passing through the baggage. The baggage communication ports may be opened and closed with shutters as described elsewhere herein.

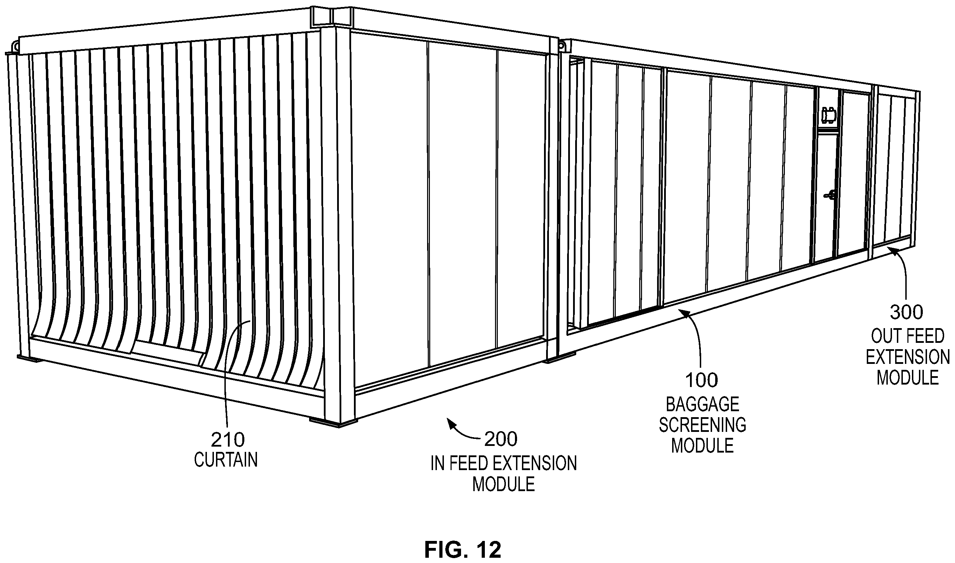

With reference to FIG. 12, a strip door or strip curtain 210 is provided at a front or entrance face of the in-feed extension module 200 to allow baggage handlers to easily pass through the door when loading the in-feed conveyor 200 and to keep adverse weather (e.g. rain) out. Similarly (but not shown), a rear or exit face of the out-feed extension module 300 is open and covered by a strip door.

The baggage screening module 100 itself includes further modifications as compared to the embodiments of FIGS. 1 to 6. It should be appreciated that such changes are stand alone and do not need to be included in conjunction with the in-feed and out-feed extension modules 200, 300 in some embodiments. Referring to FIG. 7, the baggage screening module 100 includes a baggage screening device 105, which may be described according to the description of the baggage screening device 5 provided with reference to FIG. 5. Further, the baggage screening device 105 may be designed to at least meet the requirements of European Civil Aviation Conference (ECAC) Standard 3 level. The baggage screening device 105 includes an X-Ray Computer Tomography (CT) machine 106 and automated solid and liquid detection algorithms run by a computer processor. The baggage screening device 105 may include a stationary gantry providing detailed 3-D X-ray images of the items being scanned at speeds in excess of 1800 bags per hour. The baggage screening device 105 outputs automated alarms or advisories of detected explosives or other suspect items or materials of interest so that the baggage item can be further expected by a human operator.

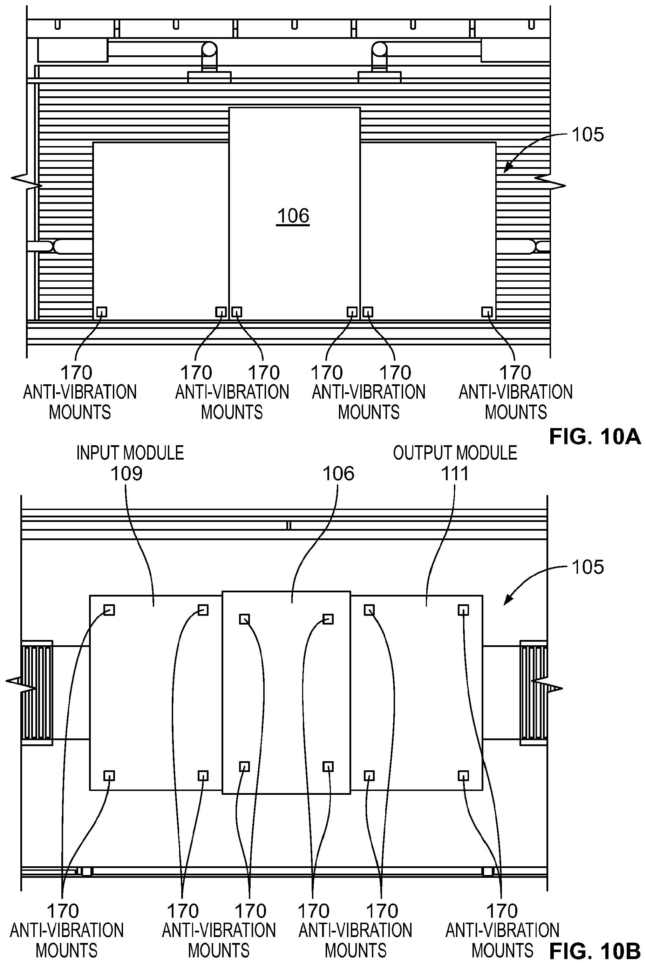

With reference to FIGS. 10A and 10B, anti-vibration mounts 170 mount the baggage screening device 105 to a floor of the baggage screening module 100 to protect the sensitive CT X-ray machine 106, which is particularly required because of the high precision specification of the CT X-ray machine 106. The vibration mounts 170 isolate the CT X-ray machine 106 from damage during transit and installation. The anti-vibration mounts 170 stay in position during baggage screening, which can be especially useful in earthquake prone sites. The anti-vibration mounts 170 form feet of the baggage screening device 105 and include resiliently deflectable materials or structures or elastomeric elements to absorb both vertical and radial (lateral) loads. In the plan view of FIG. 10B, a distribution of anti-vibration mounts 170 is provided across an input module 109, an output module 111 and the CT X-ray machine 106 of the baggage screening device 105. For example, an anti-vibration mount 170 may be in each corner region of the input module 109, the output module 111 and the CT X-ray machine 106.

In embodiments, the baggage screening device 105 is operable in at least two modes: stand-alone where bags are fed manually in one end, processed through the baggage screening device 105 and then taken off manually at the back end. The baggage screening device 105 may output a visualization on a display device of the X-ray screening output. A human visual inspection of the display device may be implemented to inspect each bag. Such systems must necessarily operate relatively slowly so that the human viewer can keep up. In another mode, the baggage screening device 105 is connected to a full baggage handling system and at least 1200 bags per hour can be processed whereby a human inspector reviews only automatically flagged baggage (such as baggage flagged by an automatic Explosive Detection System (EDS)).

With reference to FIGS. 7, 8 and 9, the baggage screening module 100 according to an exemplary embodiment includes an air conditioning system including one or more outdoor AC units 127 and one or more indoor AC units 128, which may be AC fan coil units, for regulating (cooling or heating) a temperature within the baggage screening module 100. The outdoor AC units 127 are integrated within a framework of the baggage screening module 100 rather than protruding therefrom to guard against damage, particularly during transportation. The baggage screening module 100 includes first and second end walls 103b, 103c connected by first and second side walls 103d, 103e and floor and roof walls. The walls are constructed in part by a frame 160 in a rectangular prism shape formed by horizontal and vertical beams 164, 165. In one embodiment, a recess 166 is defined in the baggage screening module 100 within which the outdoor AC units 127 reside. In one embodiment, the outdoor AC units 127 are arranged in a vertically stacked fashion. The recess 166 is disposed in a corner region within an outer envelope of the frame 160. The recess 166 may be defined between a vertical beam 164 that is located in a central region of the first end wall 103b and a corner post 162 (which is also a vertical beam) and a pair of set back vertical beams. The outdoor AC units 127 are supported by the frame 160. The outdoor AC units 127 may be located in a recess 166 in either the first or second end walls 103b, 103c, wherein the recess 166 is bounded by vertical (e.g. four vertical beams 164, each located at a corner of the recess 166) and horizontal beams 164, 165. The frame may be made of steel or other metal.

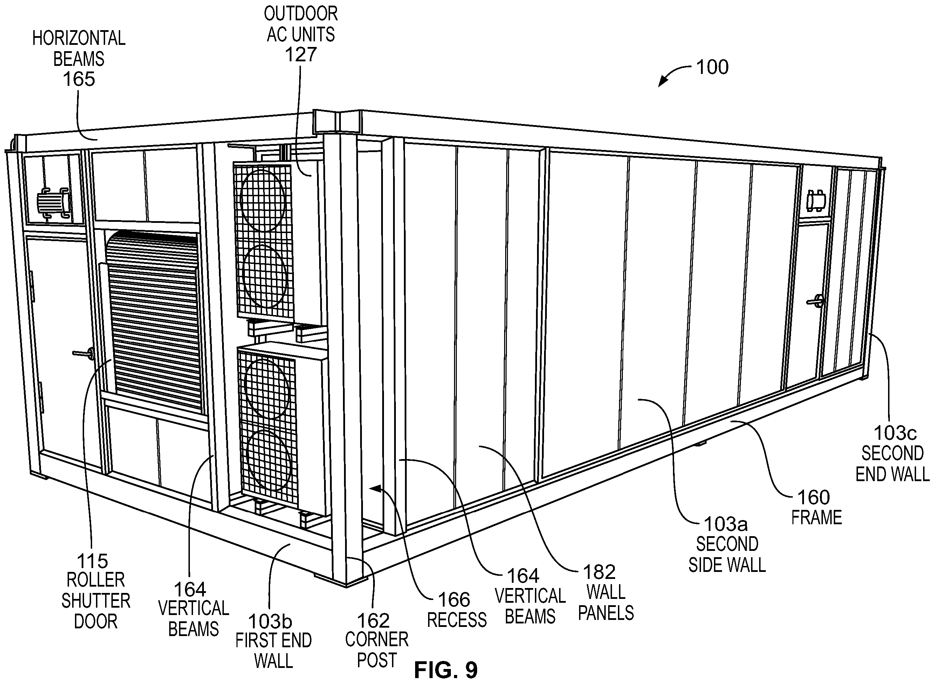

Referring to FIGS. 9, 11 and 12, the baggage screening module 100 and optional in-feed and out-feed extension modules 200, 300 include light weight wall panels extending between the vertical and horizontal beams 164, 165 in order to reduce an overall weight of the modules. The wall panels 182 are set within the frame 160 by way of retaining plates and/or retaining angles 180, 184, 186 (internal and external), which are mounted against the vertical and/or horizontal beams 164, 165 to hold the wall panels substantially within a thickness of the vertical and/or horizontal beams 164, 165. The wall panels 182 rest on a top surface of a horizontal beam 164. The wall panels 182 may be external cladding boards including outer protective layers and insulative material such as mineral wool inside. The wall panels 182 may be sound and thermally insulating and fireproof. Between neighbouring vertical beams, more than one wall panel may be arranged and the edges of each wall panel may have inter-fitting shapes.

In another contrast to the embodiments of FIGS. 1 to 6, the second side wall 103e may be made to include the wall panels 182 and only the first side wall 103d (opposite the second side wall 103e) includes a roller shutter door. The roller shutter door 115 at the first end wall 164 covering the baggage receiving port 9 and the corresponding roller shutter door at the second end wall 103c covering the baggage discharge may be linked to a computer controller and a fire system so that when a fire alarm is invoked, the roller shutter doors 115 are automatically closed to create a secure environment for the baggage screening device 5 machine that is fireproof for a certain amount of time, e.g. 1 hour or more. In embodiments, conveyors 107, 117 in the baggage screening module 100 are controlled by the computer system to automatically purge any baggage in response to receipt of a fire alarm signal.

In a further embodiment, the computer controller incudes functionality (computer program executed by one or more computer processors) to stream or otherwise transmit over a network (e.g. wirelessly) the output data from the baggage screening device or a rendering thereof to a remote workstation that includes one or more display devices. In this way, the human operative does not need to be locally situated in the baggage screening module 100 to view the display of the baggage screening. In one embodiment, the remote workstation may receive output data from more than one baggage screening module 105 and display a video of the baggage screening output from a plurality of sources. This can allow a dedicated, centralized remote screening human work centre, which can increase efficiency and reduce personnel costs.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A baggage screening module, including: a baggage screening device; and a transportable container housing the baggage screening device; wherein the baggage screening device is operable within the container to screen baggage, and the baggage screening module is transportable to a place of use.

2. A baggage screening module according to Claim 1, wherein the baggage screening device is fixed to the transportable container during transport and use.

3. A baggage screening module according to Claim 1, wherein the container includes
a first opening for receiving baggage, and
a first door for selectively closing the first opening.

4. A baggage screening module according to any one of the preceding claims, including a first conveyor for feeding incoming baggage to the screening device, wherein the first conveyor is fixed to the transportable container during transport and use.

5. A baggage screening module according to any one of the preceding claims, the container includes a second opening for dispatching screened baggage and
a second door for selectively closing the second opening.

6. A baggage screening module according to Claim 1, including a communications link for remotely communicating baggage screening data.

7. A transportable baggage screening module, comprising:
a transportable container; and
a baggage screening device fixed to a floor of the transportable container via anti-vibration mounts.

8. The transportable baggage screening module of Claim 7, wherein the baggage screening device includes a Computer Tomography (CT) X-ray imaging device, optionally wherein the CT X-ray imaging device has a stationary gantry.

9. The transportable baggage screening module of Claim 7, comprising an in-feed conveyor fixed to the floor of the transportable container for feeding baggage into the baggage screening device and comprising an out-feed conveyor fixed to the floor of the transportable container for feeding baggage out from the baggage screening device, optionally comprising a fire alarm system and a computer controller, wherein the computer controller is configured to automatically control the in-feed conveyor and the out-feed conveyor to purge baggage in the transportable baggage screening module in response to an alarm signal from the fire alarm system.

10. The transportable baggage screening module of Claim 7, comprising a computer controller and a communications link operable to send baggage screening imaging data output from the baggage screening device for display at a remote computer workstation.

11. A baggage screening system, comprising:
a transportable baggage screening module; and
at least one of an in-feed extension module and an out-feed extension module;
wherein the transportable baggage screening module comprises:
a transportable baggage screening container; and
a baggage screening device fixed to a floor of the transportable baggage screening container;
wherein the at least one of the in-feed extension module and the out-feed extension module comprises:
a transportable extension module container; and
a conveyor fixed to a floor of the transportable extension module container.

12. The baggage screening system of Claim 11, wherein the at least one of the in-feed extension module and the out-feed extension module comprises a weighing scale for weighing baggage on the conveyor, and/or
wherein the transportable baggage screening container has a rectangular prism shape having a length, a width and a height and the transportable extension module container has a rectangular prism shape of substantially the same width and height and different length.

13. The baggage screening module of Claim 11, wherein the transportable baggage screening module and the at least one of the in-feed extension module and the out-feed extension module are separately transportable and are arranged to be placed in abutment with one another and include openings in abutting faces to allow passage of baggage therethrough, and/or wherein a front or rear face of the at least one of the in-feed extension module and the out-feed extension module has a strip door.

14. The baggage screening module of Claim 11, wherein the transportable baggage screening module comprises one or more outdoor Air Conditioning (AC) units that are located within an outermost envelope of a frame of the transportable baggage screening container.

15. The baggage screening module of Claim 11, wherein at least one of the transportable baggage screening module and the at least one of the in-feed extension module and the out-feed extension module comprise a frame of vertical and horizontal beams, optionally wherein lightweight wall panels are mounted to the frame to form at least one of: one or more sidewalls, one or more end walls and a roof.
